# EUROPÄISCHE PATENTANMELDUNG

(11) **EP 2 447 621 A1**
(43) Veröffentlichungstag der Anmeldung: **02.05.2012**
(21) Anmeldenummer: 10075725.1
(22) Anmeldetag: 01.11.2010
(51) Int. Cl.: F24J 2/52

(54) **Gestellsystem zur Montage von Solarmodulen**

(71) Anmelder: Ingenieurbüro Minthe, 21149 Hamburg (DE)
(72) Erfinder: Minthe, Fode Youssouf, 21149 Hamburg (DE)
(74) Vertreter: Kietzmann, Manfred

(57) **Zusammenfassung**

Beschrieben wird ein Gestellsystem zur Montage von Solarmodulen mit Trägerlängsschienen (1), die durch Querschienen (2) miteinander verbindbar sind zu rahmenartigen Aufnahmen (3) für gerahmte oder nichtgerahmte Solarmodule (4). Sowohl die Trägerschienen (1) als auch die Querschienen (2) weisen einen zum Solarmodul (4) hin offenen U-Profilquerschnitt auf mit Seitenstegen (5, 6) und einen die Seitenstege (5, 6) verbindenden Grundsteg (7). Jeweils auf dem Grundsteg (7) ist eine aus zwei parallelen Nutstegen (9, 10) gebildete Rastnut (8) angeordnet, wobei die parallelen Nutstege (9, 10) außen Auflagen (11) für die Solarmodule (4) aufweisen. In die Rastnut (8) sind Rastschienen (12) unter Bildung einer Rastverbindung einsetzbar, wobei die Rastschienen (12) die Solarmodule (4) in deren Seitenbereichen übergreifen und auf die Auflagen (11) drücken (Fig. 1).

## Beschreibung

Die Erfindung betrifft insbesondere ein Indachmontagesystem für Solarmodule in gerahmter oder nichtgerahmter Form.

Indachmontagesysteme für Solarmodule sind bekannt. Das in der EP 2 023 059 A1 beschriebene Montagesystem besteht aus parallel zueinander angeordneten Tragschienen, die sich auf dem Tragwerk abstützen, zwischen denen Abdichtplatten angeordnet sind und auf denen die Solarmodule fixiert werden.

Die Tragschiene selbst besteht aus gegenüberliegenden Flanschabschnitten, die jeweils eine C-förmige Nut zur Aufnahme von Befestigungsbolzen am Tragwerk bzw. für die Solarmodule aufweisen und einem die Flanschabschnitte verbindenden doppelwandigen Mittelsteg, der Befestigungsstellen für die Fixierung der Abdichtplatten aufweist. Weiter sind beidseitig am Flanschabschnitt für die Befestigung am Tragwerk rinnenförmige Längsstege angeordnet, die einerseits zur Ableitung von Wasser dienen und andererseits als Auflage für die Abdichtplatten.

Nachteilig bei diesem Montagesystem nach EP 2 023 059 A1 ist die Vielzahl notwendiger Verschraubungen, was bei einer Dachmontage stets aufwendig ist. Die Abdichtplatten tragen dazu bei, dass das System vergleichsweise hoch und schwer wird.

Aufgabe der Erfindung ist es, ein Montagesystem für gerahmte und nichtgerahmte Solarmodule unterschiedlicher Höhe vorzuschlagen, das insbesondere als Indachsystem einsetzbar ist und das ohne größeren Schraubaufwand montierbar ist.

Gelöst wird diese Aufgabe mit den Merkmalen des Anspruches 1, vorteilhafte Ausgestaltungen sind Gegenstand der Unteransprüche.

Erfindungsgemäß wird ein Gestellsystem zur Montage von Solarmodulen vorgeschlagen mit Trägerlängsschienen, die durch Querschienen miteinander verbindbar sind zu rahmenartigen Aufnahmen für gerahmte oder ungerahmte Solarmodule, wobei sowohl die Trägerschienen als auch die Querschienen einen zum Solarmodul hin offenen U-Profilquerschnitt aufweisen mit Seitenstegen und einen die Seitenstege verbindenden Grundsteg, wobei jeweils auf dem Grundsteg eine aus zwei parallelen Nutstegen gebildete Rastnut angeordnet ist und die parallelen Nutstege außen Auflagen für die Solarmodule aufweisen, und in die Rastnut Rastschienen unter Bildung einer Rastverbindung einsetzbar sind, wobei die Rastschienen die Solarmodule in deren Seitenbereichen übergreifen und auf die Auflagen drücken.

Die so in den rahmenartigen Aufnahmen mittels einer Rastverbindung fixierten Solarmodule halten einer Sogkraft von über 2 Tonnen stand, was das Gestellsystem nahezu überall einsetzbar macht.

Das Gestellsystem wird bevorzugt über die
Trägerlängsschienen mit einem Tragwerk, z.B. einer Dachkonstruktion, verbunden. Dies ist die einzige Verbindung, die gewöhnlich über Schrauben realisiert wird. Die Anbindung an die Dachhaut erfolgt bevorzugt in herkömmlicher Weise über entsprechende Anschlussbleche.

In einer vorteilhaften Ausgestaltung weist die Rastnut beidseitig mehrere sägezahnförmige und parallel in Nutlängsrichtung verlaufende Stege auf, so dass eine Rastverbindung mit der Rastschiene in unterschiedlichen Nuttiefen herstellbar ist. Auf diese Weise lassen sich Solarmodule unterschiedlicher Höhe festlegen. Sollen Solarmodule mit Höhen von z.B. über 30 mm angeordnet werden, sieht eine weitere vorteilhafte Ausgestaltung vor, dass in die Rastnut ein Adapterteil oder eine Adapterschiene einsetzbar ist, die auf der einen Seite mit einem Rastprofil wie das Innenprofil der Rastnut versehen ist und die auf der anderen Seite über Rastschenkel zur Herstellung einer Rastverbindung mit der Rastnut verfügt. Die Rastnut wird durch das Adapterteil sozusagen gedoppelt.

In einer bevorzugten Ausführung bestehen die Rastschienen aus zwei spiegelgleich und beabstandet zueinander angeordneten und miteinander lösbar verbundenen Winkelprofilen, wobei die parallel zueinander liegenden Winkelschenkel außen mindestens jeweils eine, vorzugsweise jeweils zwei und jeweils in Profillängsrichtung verlaufende Raststege aufweisen zur Herstellung der Rastverbindung mit den Stegen der Rastnut. Durch die lösbare Verbindung zwischen den Winkelprofilen der Rastschienen wird auch die Rastverbindung lösbar, was insbesondere für den manchmal notwendigen Austausch von Solarmodulen von Wichtigkeit ist.

In einer bevorzugten Ausführung werden die Winkelprofile der Rastschienen durch eine U-Schiene, die in gegenüberliegende U-Taschen oder U-Rinnen der parallel angeordneten Winkelschienen unter Form- und/oder Kraftschluss eingreift, miteinander verbunden. Der Formund/oder Kraftschluss ist dabei so ausgeführt, dass die U-Schiene mittels eines Werkzeuges aus den U-Taschen bzw. U-Rinnen heraushebelbar ist.

Für die Herstellung der Verbindung zwischen den Trägerlängsschienen und den Querschienen ist in einer vorteilhaften Ausführung vorgesehen, dass die Trägerlängsschienen außen an den parallelen Nutstegen, die die Rastnut bilden, oder an den hier angeordneten Auflagen U-Taschen oder U-Rinnen vorgesehen sind, in die ein oder mehrere Clickteile form- und/oder kraftschlüssig einsetzbar sind, wobei das andere Ende jedes Clickteils eine formund/oder kraftschlüssige Aufnahme für Stirnseitenabschnitte der Querschiene besitzt, vorzugsweise für den Grundsteg der Querschienen. Die Anordnung der U-Taschen, die vorzugsweise über die ganze Schienenlänge erfolgt (U-Rinnen), und die Abmaße der Clickteile sind dabei so aufeinander abgestimmt, dass die Auflagefläche der Auflagen der verbundenen Trägerlängs- und Querschienen in einer Ebene liegen.

In einer weiteren vorteilhaften Ausgestaltung ist vorgesehen, dass die Seitenstege der Trägerlängsschienen und/oder der Querschienen so ausgebildet sind, dass Clickteile form- und/oder kraftschlüssig auf die Seitenstege aufsteckbar sind. Auf diese Weise lassen sich vorteilhaft Kabel der Solarmodule fixieren.

Das vorgeschlagene Gestellsystem soll in einer vorteilhafte Ausführung anhand der Zeichnungen erläutert werden.
Es zeigen:
- Fig. 1:: Gestellsystem zusammengebaut,
- Fig. 2:: Trägerlängsschiene,
- Fig. 3:: Querschiene,
- Fig. 4:: Winkelprofil der Rastschiene,

- Fig. 5:: U-Schiene der Rastschiene,
- Fig. 6:: Adapterteil und
- Fig. 7:: Clickteil

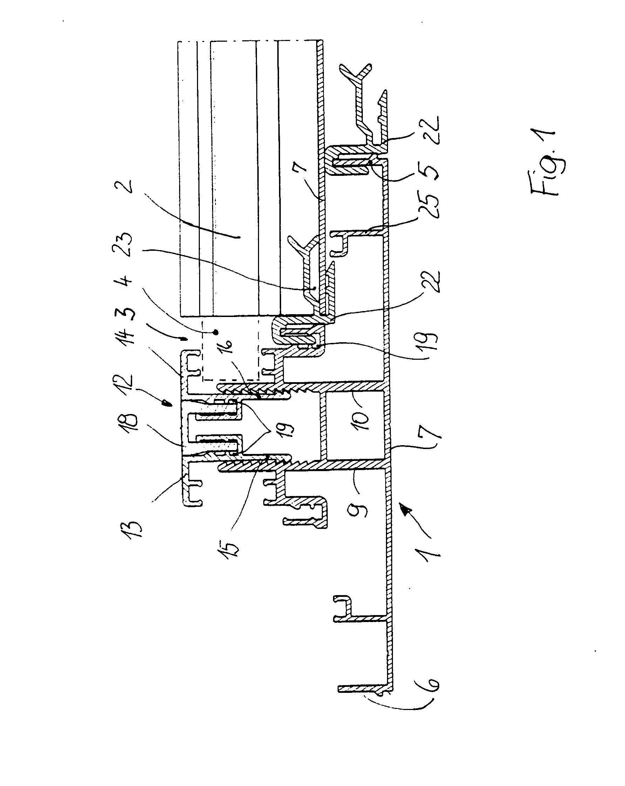

**Fig. 1** zeigt das zusammengebaute Gestellsystem zur Montage von Solarmodulen 4 in einem Schnitt. Die dargestellt Trägerlängsschiene 1 ist mit der Querschiene 2 mittels Clickteilen 22 verbunden. Zwei Querschienen 2 bilden so mit zwei nebeneinander und beabstandet angeordneten Abschnitten von Trägerlängsschienen 1 eine rahmenartige Aufnahme 3 für gerahmte oder nichtgerahmte Solarmodule 4.

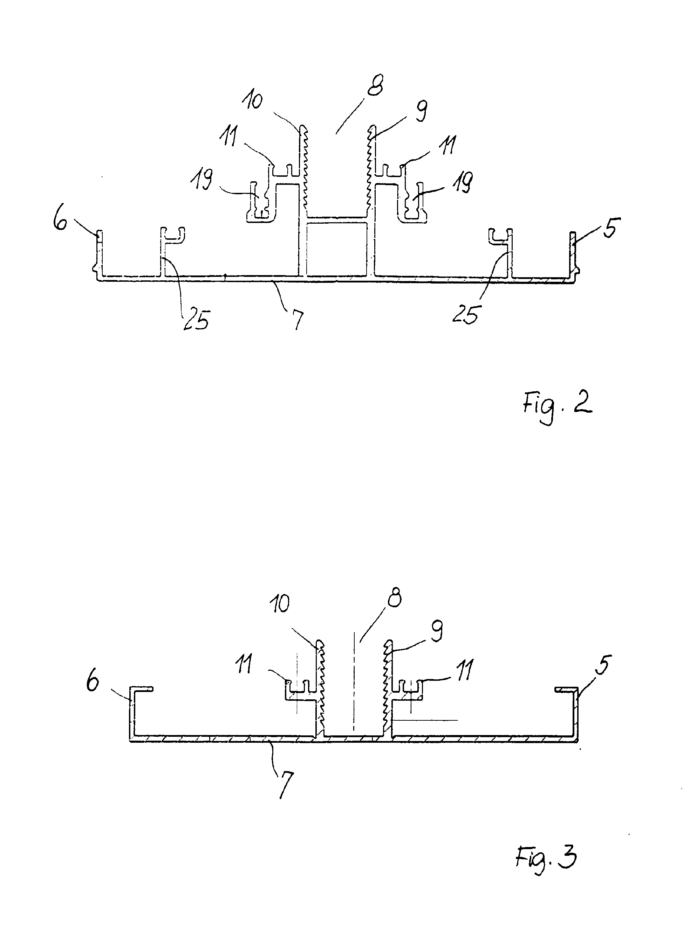

Sowohl die Trägerlängsschienen 1 (vgl. Fig.2) als auch die Querschienen 2 (vgl. Fig.3) weisen einen zum Solarmodul 4 hin offenen U-Profilquerschnitt auf mit Seitenstegen 5, 6 und einen die Seitenstege 5, 6 verbindenden Grundsteg 7. So entsteht eine Wanne im Befestigungsbereich der Solarmodule, wo sich möglicherweise eindringendes Wasser sammelt und von wo es abgeleitet wird.

Jeweils auf dem Grundsteg 7 der Trägerlängsschienen 1 und der Querschienen 2 ist eine aus zwei parallelen Nutstegen 9, 10 gebildete Rastnut 8 angeordnet, vorzugsweise mittig.

Ferner weisen die parallelen Nutstege 9, 10 außen Auflagen 11 für die Solarmodule 4 auf. Die Anordnung der die Verbindung zwischen den Trägerlängsschienen 1 und den Querschienen 2 herstellenden Clickteile 22 und deren Abmaße sind dabei so aufeinander abgestimmt, dass die Auflagefläche der Auflagen 11 der verbundenen Trägerlängs-und Querschienen 1, 2 in einer Ebene liegen.

In die Rastnute 8 werden die Rastschienen 12 unter Bildung einer Rastverbindung eingesetzt, wobei die Rastschienen 12 die Solarmodule 4 in deren Seitenbereichen übergreifen und auf die Auflagen 11 drücken.

Dadurch, dass die Rastnut 8 beidseitig mehrere sägezahnförmige und parallel in Nutlängsrichtung verlaufende Stege aufweist, lässt sich eine Rastverbindung mit einer Rastschiene 12 in unterschiedlichen Nuttiefen herstellen, wodurch das Gestellsystem für Solarmodule 4 unterschiedlichster Höhe verwendbar ist.

Die Auflagen 11 und auch die Rastschienen 12 sind im Bereich der Anlagefläche an den Solarmodul 4 nutartig ausgebildet zur Aufnahme einer Dichtung, was das Eindringen von Wasser unter die Solarmodule 4 verhindert.

Die in **Fig 2** dargestellte Trägerlängsschiene 1 und die in **Fig. 3** abgebildete Querschiene 2 weisen jeweils einen zum Solarmodul 4 hin offenen U-Profilquerschnitt auf mit Seitenstegen 5, 6 und einen die Seitenstege 5, 6 verbindenden Grundsteg 7, wobei jeweils auf dem Grundsteg 7 eine aus zwei parallelen Nutstegen 9, 10 gebildete Rastnut 8 angeordnet ist und die parallelen Nutstege 9, 10 außen Auflagen 11 für die Solarmodule 4 besitzen.

Die Trägerlängsschiene 1 weist noch einige darüberhinausgehende Besonderheiten auf:
So sind die Seitenstege 5, 6 derart ausgebildet, dass Clickteile 22 form- und/oder kraftschlüssig auf die Seitenstege 5, 6 aufsteckbar sind und u.a. zur Fixierung von Kabeln zu und von den Solarmodulen 4 dienen können.

Ferner weist die Trägerlängsschiene 1 außen an den parallelen Nutstegen 10, 11, die die Rastnut 8 bilden, oder an den hier angeordneten Auflagen 11 U-Taschen 19 auf, in die ein oder mehrere Clickteile 22 form- und/oder kraftschlüssig einsetzbar sind. Diese U-Taschen 19 sind in Längsrichtung der Trägerlängsschienen 1 bzw. der unten beschriebenen Winkelprofile 13, 14 der Rastschienen 12 vorzugsweise durchgängig verlaufend ausgebildet, stellen somit U-Rinnen dar.

Dargestellt wird auch, dass der Grundsteg 7 der Trägerlängsschienen 1 hier beidseitig der die Rastnut 8 bildenden Nutstege 9, 10 Abstützstege 25 für die Querschienen 2 besitzt.

Die dargestellte Trägerlängsschiene 1 weist eine Höhe von z.B. 43 mm auf. Hinzu tritt dann noch ein Teil der Rastschiene 12 und möglicherweise ein Teil der Solarmodulhöhe, so dass das Gestellsystem insgesamt sehr flach ausgebildet ist und optimal "In das Dach" integrierbar ist.

Die Trägerlängsschienen 1 werden mit einem Tragwerk verbunden.

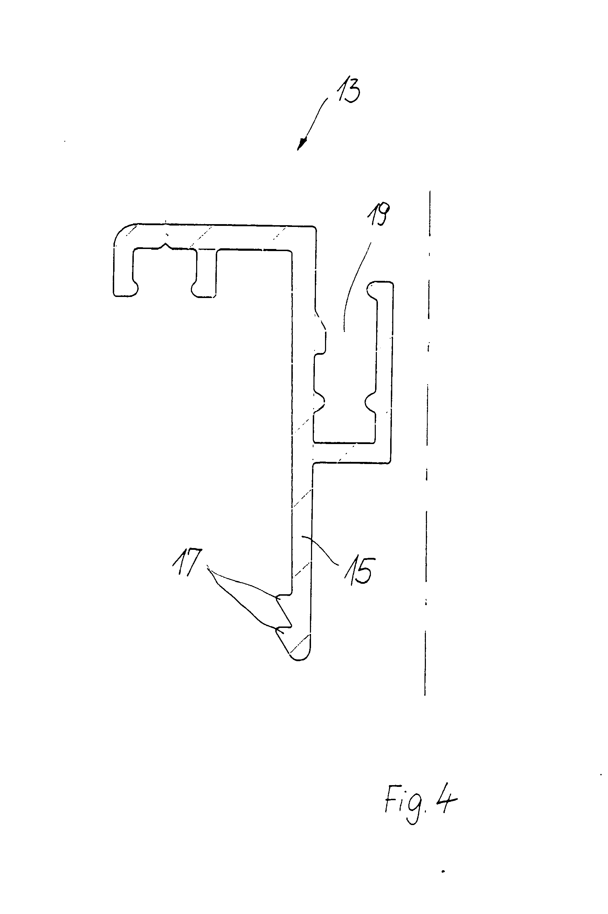

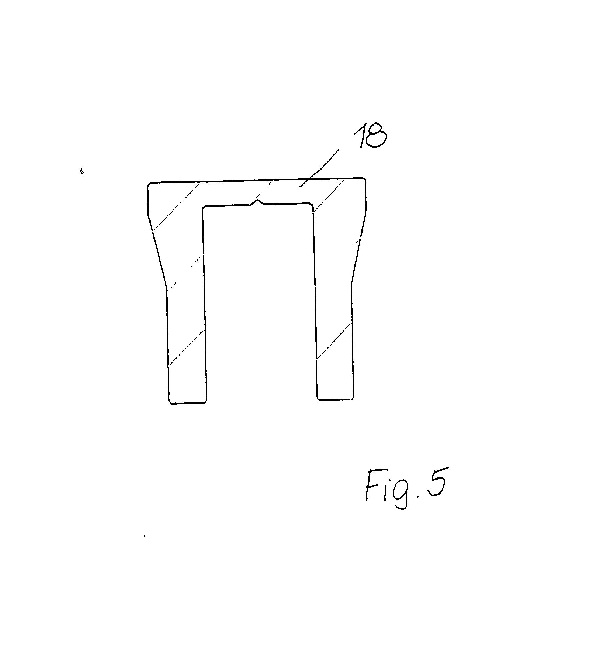

**Fig. 4** zeigt ein Winkelprofil 13, das mit einem spiegelgleichen beabstandeten Winkelprofil 14 und verbunden durch eine U-Schiene 18 (vgl. **Fig. 5****)** die Rastschiene 12 bildet.

Die parallel zueinander liegenden Winkelschenkel 15, 16 weisen außen mindestens jeweils eine, vorzugsweise jeweils zwei und jeweils in Profillängsrichtung verlaufende Raststege 17 auf zur Herstellung der Rastverbindung mit den Stegen der Rastnut 8.

Zur Verbindung der Winkelprofile 13, 14 der Rastschiene 12 durch die U-Schiene 18, sind gegenüberliegende U-Taschen/U-Rinnen 19 an den parallel angeordneten Winkelschienen 15, 16 vorgesehen, in die unter Form-und/oder Kraftschluss die U-Schiene 18 eingreift. Der Formund/oder Kraftschluss ist dabei so ausgeführt, dass die U-Schiene 18 mittels eines Werkzeuges aus den U-Taschen/ U-Rinnen 19 heraushebelbar ist.

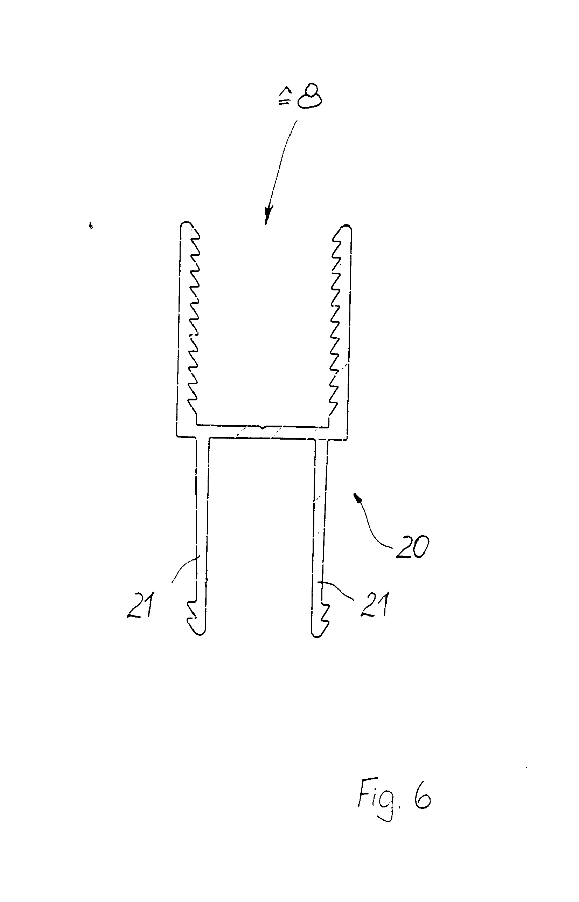

**Fig. 6** zeigt ein Adapterteil oder eine Adapterschiene 20, die nutzbar ist, wenn Solarmodule 4 mit einer größeren Höhe als die Rastnut 8 und die Rastschiene 12 es hergeben, befestigt werden sollen. Das Adapterteil oder die Adapterschiene 20 sind so ausgebildet, dass sie in die Rastnut 8 einrastend einsetzbar sind. Dazu dienen die Rastschenkel 21. Auf der anderen Seite weisen das Adapterteil oder die Adapterschiene 20 ein Rastprofil auf, das dem Innenprofil der Rastnut 8 entspricht.

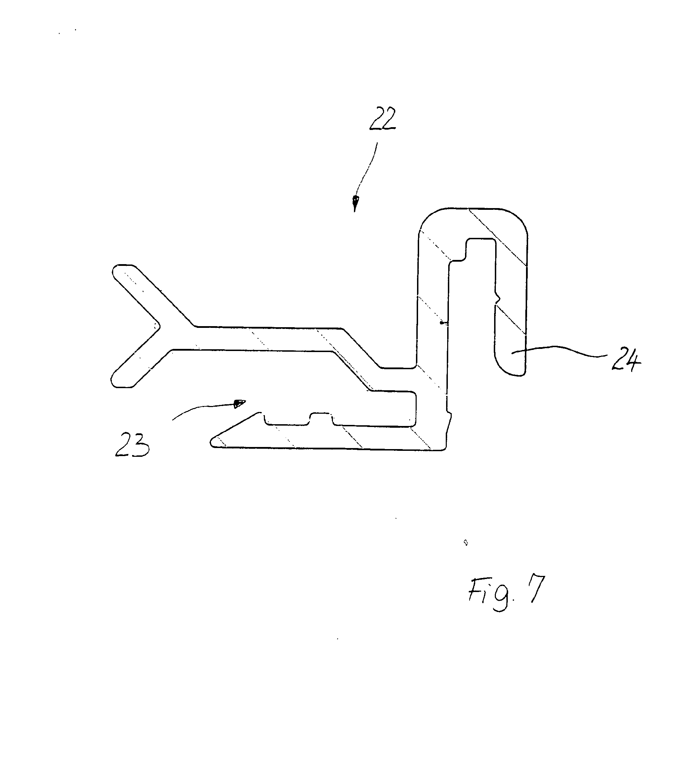

**Fig. 7** zeigt ein Clickteil 22, das bevorzugt zum Anschluss der Querschiene 2 an die Trägerlängsschiene 1 genutzt wird.

Das Clickteil 22 weist senkrecht zueinander stehende Anschlusseinrichtungen in Form einer Aufnahme 23 und eines Clickteilanschlusssteges 24 auf.

Die Trägerlängsschienen 1 weisen außen an den parallelen Nutstegen 10, 11, die die Rastnut 8 bilden, oder an den hier angeordneten Auflagen 11 U-Taschen/U-Rinnen 19 auf, in die Clickteile 22 jeweils mit dem Chlickteilanschlussschenkel 24 form- und/oder kraftschlüssig einsetzbar ist. Das andere Ende des Clickteils 22 besitzt eine form- und/oder kraftschlüssige Aufnahme 23 für Stirnseitenabschnitte der Querschiene 2, vorzugsweise für den Grundsteg 7 der Querschiene 2. Bevorzugt werden zwei Clickteile 22 zum Anschluss einer Querschiene 2 genutzt.

Zusammenfassend ist festzustellen, dass das vorgeschlagene Gestellsystem sich vor allem auszeichnet durch eine feuchtigkeitsundurchlässige Montageanordnung bedingt durch die Rundumabdichtung durch die Rastschienen und eine ergänzende Feuchtigkeitssammlung und Ableitung durch die Schienenprofile, eine schraubenlose Modulmontage, was die Montagekosten erheblich senkt, die Eignung für unterschiedlichste Solarmodulhöhen und für gerahmte und nichtgerahmte Solarmodule sowie durch eine breite Einsetzbarkeit aufgrund des hohen Sogkraftwiderstandes.

### Bezugszeichenliste

- 1: Trägerlängsschienen
- 2: Querschienen
- 3: rahmenartige Aufnahme
- 4: Solarmodule
- 5: Seitensteg des U-Profils der Schienen 1, 2
- 6: Seitensteg des U-Profils der Schienen 1, 2
- 7: Grundsteg
- 8: Rastnut
- 9: Nutsteg
- 10: Nutsteg
- 11: Auflagen
- 12: Rastschiene
- 13: Winkelprofil
- 14: Winkelprofil
- 15: Winkelschenkel
- 16: Winkelschenkel
- 17: Raststege
- 18: U-Schiene
- 19: U-Taschen/U-Rinnen
- 20: Adapterteil
- 21: Rastschenkel
- 22: Clickteil
- 23: Aufnahme des Clickteils
- 24: Clickteilanschlussschenkel
- 25: Abstützstege

## Patentansprüche

1. Gestellsystem zur Montage von Solarmodulen mit
Trägerlängsschienen (1), die durch Querschienen (2) miteinander verbindbar sind zu rahmenartigen Aufnahmen (3) für gerahmte oder nichtgerahmte Solarmodule (4),
wobei sowohl die Trägerschienen (1) als auch die Querschienen (2) einen zum Solarmodul (4) hin offenen U-Profilquerschnitt aufweisen mit Seitenstegen (5, 6) und einen die Seitenstege (5, 6) verbindenden Grundsteg (7),
wobei jeweils auf dem Grundsteg (7) eine aus zwei parallelen Nutstegen (9, 10) gebildete Rastnut (8) angeordnet ist und die parallelen Nutstege (9, 10) außen Auflagen (11) für die Solarmodule (4) aufweisen,
und in die Rastnut (8) Rastschienen (12) unter Bildung einer Rastverbindung einsetzbar sind, wobei die Rastschienen (12) die Solarmodule (4) in deren Seitenbereichen übergreifen und auf die Auflagen (11) drücken.

2. Gestellsystem nach Anspruch 1, **dadurch gekennzeichnet, dass**
die Rastnut (8) beidseitig mehrere sägezahnförmige und parallel in Nutlängsrichtung verlaufende Stege aufweist, so dass eine Rastverbindung mit der Rastschiene (12) in unterschiedlichen Nuttiefen herstellbar ist.

3. Gestellsystem nach Anspruch 1 oder 2, **dadurch gekennzeichnet, dass**
die Rastschiene (12) aus zwei spiegelgleich und beabstandet zueinander angeordneten und miteinander verbundenen Winkelprofilen (13, 14) besteht, wobei die parallel zueinander liegenden Winkelschenkel (15, 16) außen mindestens jeweils eine, vorzugsweise jeweils zwei und jeweils in Profillängsrichtung verlaufende Raststege (17) aufweisen zur Herstellung der Rastverbindung mit den Stegen der Rastnut (8).

4. Gestellsystem nach Anspruch 3, **dadurch gekennzeichnet, dass**
die Winkelprofile (13, 14) der Rastschiene (12) lösbar miteinander verbunden sind.

5. Gestellsystem nach Anspruch 4, **dadurch gekennzeichnet, dass**,
die Winkelprofile (13, 14) der Rastschiene (12) durch eine U-Schiene (18), die in gegenüberliegende U-Taschen (19) der parallelen Winkelschienen (15, 16) unter Form- und/oder Kraftschluss eingreift, verbindbar sind.

6. Gestellsystem nach einem der Ansprüche 1 bis 5,
**dadurch gekennzeichnet, dass**
für Solarmodule (4) mit einer größeren Höhe in die Rastnut (8) ein Adapterteil oder eine Adapterschiene (20) einsetzbar ist, die auf der einen Seite mit einem Rastprofil wie das Innenprofil der Rastnut (8) versehen ist und die auf der anderen Seite über Rastschenkel (21) zur Herstellung einer Rastverbindung mit der Rastnut (8) verfügt.

7. Gestellsystem nach einem der Ansprüche 1 bis 6,
**dadurch gekennzeichnet, dass**
die Trägerlängsschienen (1) außen an den parallelen Nutstegen (10, 11), die die Rastnut (8) bilden, oder an den hier angeordneten Auflagen (11) U-Taschen (19) aufweisen, in die Clickteile (22) form- und/oder kraftschlüssig einsetzbar sind, wobei das andere Ende jedes Clickteils (22) eine form- und/oder kraftschlüssige Aufnahme (23) für Stirnseitenabschnitte der Querschiene (2) besitzt, vorzugsweise für den Grundsteg (7) der Querschiene (2).

8. Gestell nach Anspruch 4 oder 7, **dadurch**
**gekennzeichnet, dass**
die U-Taschen (19) in Längsrichtung der Trägerlängsschienen (1) bzw. der Winkelprofile (13, 14) der Rastschienen (12) durchgängig verlaufend ausgebildet sind, somit U-Rinnen darstellen.

9. Gestellsystem nach einem der Ansprüche 1 bis 8,
**dadurch gekennzeichnet, dass**
der Grundsteg (7) der Trägerlängsschienen (1) vorzugsweise beidseitig der die Rastnut (8) bildenden Nutstege (9, 10) Abstützstege (25) für Querschienen (2) aufweist.

10. Gestellsystem nach einem der Ansprüche 1 bis 9,
**dadurch gekennzeichnet, dass**
die Seitenstege (5, 6) der Trägerlängsschienen (1) so ausgebildet sind, dass Clickteile (22) form- und/oder kraftschlüssig auf die Seitenstege (5, 6) aufsteckbar sind.

11. Gestellsystem nach einem der Ansprüche 1 bis 10,
**dadurch gekennzeichnet, dass**
die Auflagefläche der Auflagen (11) der verbundenen Trägerlängs- und Querschienen (1, 2) in einer Ebene liegen.

12. Gestellsystem nach einem der Ansprüche 1 bis 11,
**dadurch gekennzeichnet, dass**
die Auflagen (11) und die Rastschienen (12) im Bereich der Anlagefläche an die Solarmodule (4) nutartig ausgebildet sind zur Aufnahme einer Dichtung.

13. Gestellsystem nach einem der Ansprüche 1 bis 12,
**dadurch gekennzeichnet, dass**
das Clickteil (22) senkrecht zueinander stehende Anschlusseinrichtungen vorzugsweise in Form einer Aufnahme 23 und eines Clickteilanschlusssteges 24 aufweist.

14. Gestellsystem nach einem der Ansprüche 1 bis 12,
**dadurch gekennzeichnet, dass**
die Trägerlängsschienen (1) mit einem Tragwerk verbindbar sind.
